Europäisches Patentamt

(19) European Patent Office

Office européen des brevets

(11) Publication number: 0 027 676
A1

(12) EUROPEAN PATENT APPLICATION

(21) Application number: 80200986.0

(22) Date of filing: 17.10.80

(51) Int. Cl.³: F 24 D 3/10
F 24 D 3/00

(30) Priority: 19.10.79 NL 7907727

(43) Date of publication of application:
29.04.81 Bulletin 81/17

(84) Designated Contracting States:
AT BE CH DE FR GB IT LI LU NL SE

(71) Applicant: WAVIN B.V.
251 Händellaan
NL-8031 EM Zwolle(NL)

(72) Inventor: Bontje, Theodorus Petrus Maria
97 de Tak
NL-7701 LG Dedemsvaart(NL)

(72) Inventor: Schuldink, Gerrit
36 Coevorderweg
Ommen(NL)

(74) Representative: van der Veken, Johannes
Adriaan et al,
EXTERPATENT 3 & 4 Willem Witsenplein
NL-2596 BK The Hague(NL)

(54) A pipe system for conveying heating fluids and a division gully for use in such a pipe system.

(57) Pipe system for conveying a heating fluid to a plurality of edifices or houses to be heated separately, comprising flexible service supply lines 1 to 7 and flexible service return lines 1' to 7', extending into a first division gully 6, said service supply lines 1 to 7 being connected with a gully connecting supply line 5, also extending into said first division gully 6 and said service return lines 1' to 7' being connected with a gully connecting return line 5', also extending into said first division gully 6, the gully connecting supply 5 and return 5' line extending into a second division gully 4 and being connected in said second division gully with the main supply line 1 and the main discharge line 2. The flexible service lines 1 to 7; 1' to 7' consist of foam plastics insulated polybutylene pipes.

./...

EP 0 027 676 A1

Fig. 1.

A pipe system for conveying heating fluids

)

The invention relates to a pipe system for conveying heating fluids.

A pipe system for conveying a heating fluid to a plurality of edifices, to be heated spearately, such as houses, is known.

Said known pipe systems substantially consist of a main pipe line with right bends and branches, each edifice, house respectively, being connected with the main pipe line through a service line.

A pipe system of this type is very inconvenient as it is rather rigid, thus requiring a great number of connections of a very good quality, whilst furthermore proper attention should be paid to expansion means, anchoring points and house inlets of the pipes.

Even when pre-insulated pipes and auxiliary parts are used, considerable costs are involved in realizing the respective connections, expansion means and house inlets. At present said connections have to consist all over of reliable glue or welding connections, which connections can only be realized by skilled labourers.

An additional disadvantage of said known pipe systems is that the various different connections in pipe systems of this type, have to be applied very frequently and interspaced.

Finally the respective lines in these pipe systems are difficultly accessible, thus causing repairs and especially repairs of the connections, to be very time-consuming. In this respect it should be noted that leakages, if any, will mostly occur in the connections.

The present invention aims to provide a pipe system for conveying a heating fluid to a plurality of edifices or houses, separately to be heated, comprising a main supply line and a main discharge line, as well as service connecting lines from each edifice or house which service connecting lines are connected with said main discharge and main supply lines, said pipe system comprising at least a first division gully, into which on the one hand the service connecting supply and return lines of a group of edifices extend, whilst on the other hand the supply and return lines are connected directly or indirectly with a main supply line and a main discharge line in said first division gully.

A pipe system of this type is very advantageous as all connections with the aforementioned connecting lines and their auxiliary parts, such as valves, air release valves, means for closing a pipe line in case of pipe fractures and the like, may be accommodated in one division gully, so that the overall expenditures of pipe systems of this type can be kept rather low. When long connecting lines are used, having a length of e.g. 100 m, it is even possible to work without connections outside the division gullies and even if connections are required, they may be restricted to a minimum. The respective control and adjusting devices may also simultaneously be installed at a location which is easily accessible, thus allowing any troubles in pipe systems for conveying a

-3-

heating fluid according to the present invention, to be traced easily, so that the defects may be restricted and rapidly repaired.

It is a further advantage of the present invention that new edifices or units of edifices can be easily connected with the main supply and discharge line without any time-consuming labour to be effected, e.g. applying branch connections by drilling or the like.

It is still a further advantage of the present invention that each connecting line can be closed off from the first division gully so that only one consumer at a time will not be supplied with heating fluid, when for instance repairs or the like have to be carried out.

The first division gully is appropriately accommodated in the vicinity of a block of houses, particularly in or near the underfloor space of a first house.

All houses of said block may be provided with service connecting supply and return lines by guiding a bundle of insulated or uninsulated pipes from the first division gully through the underfloor. space.

The bundle of uninsulated pipes, the number of which decreases towards the direction of the last house, is preferably accommodated in an insulating casing, said casing being supported by the bottom or the side wall of the underfloor space.

By means of a sound insulating wall passage, said insulated casing may then be guided through the partition walls of the respective houses, said houses so being provided with connection pipes, which are cheaper than individually insulated pipes.

-4-

Preferably the pipes consist of a flexible material, such as reticulated polyethylene or polybutylene; polyvinylidene fluoride may also be used.

The pipe system according to the present invention advantageously comprises at least a second division gully into which on the one hand the main supply and the main discharge line extend, as well as gully connecting lines which on the other hand extend into a first division gully.

The latter embodiment is very convenient as the presence of a second division gully allows for a better connecting flexibility, that is to say that when house quarters are extended, additional gully connecting lines can be accommodated in the second division gully and be connected with a new first division gully, being disposed in the vicinity of a new group of houses or edifices.

The second division gully also permits heating fluid to be provided to big consumers via a gully connecting line.

A considerable advantage is obtained when gully connecting lines consist of a flexible material, permitting an instalment in extensive uninterrupted lengths.

When reticulated polyethylene or polybutylene is employed as a material for the gully connecting lines, said lines may be installed as an entirety, so that hardly any connections are required.

The present invention will be illustrated with respect to an embodiment in the accompanying drawings, wherein:

Figure 1 is a schematical first embodiment of a pipe system according to the present invention;

-5-

Figure 2 is a variant of a pipe system of fig. 1;
Figure 3 is a detail of the pipe system according to
the present invention and
Figure 4 is a detailed pipe system according to the
invention.

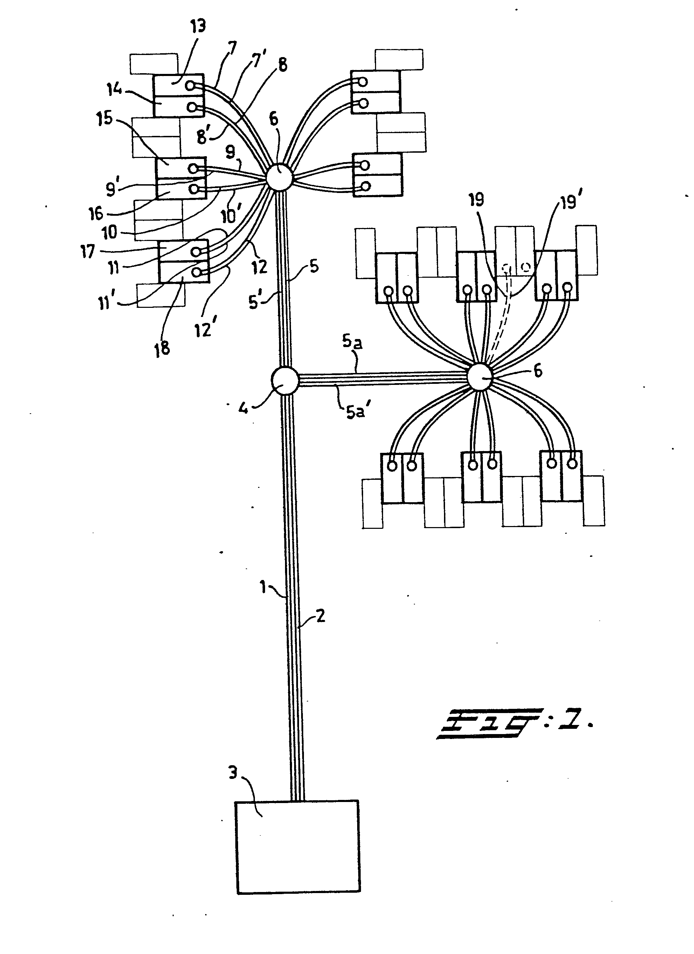

Fig. 1 is a first embodiment of a pipe system in accordance
with the present invention, comprising a main supply line 1
and a main discharge line 2, through which heating fluid is
conveyed from a main heating unit 3. The heating unit may,
for instance, be a plant providing hot water, obtained by
means of a heat exchange.

The main supply line 1 and the main discharge line 2 conveniently consisting of insulated pipes, extend into a second
division gully 4, into which second division gully also gully
connecting supply lines 5, 5a, 5b and corresponding gully connecting return lines 5' 5a', 5b' extend, said gully connecting
lines being connected with a first division gully 6.

The gully connecting supply lines 5, 5a, 5b and the gully
connecting return lines 5', 5a', 5b' are integral lines, that
is to say they comprise no separate connection means and
consist preferably of polybutylene. These lines are appropriately provided with a heat insulating layer, particularly a
foam plastic layer.

Service connecting supply lines 7, 8, 9, 10, 11, 12 from each
first division gully 6, are each directed towards a house 13,
14, 15, 16, 17 and 18, being part of one group of houses.

Obviously service connecting return lines 7', 8', 9', 10',
11' and 12' are provided as well.

The service connecting supply lines 7 to 12 included and

-6-

service connecting return lines 7' to 12' included, also consist of flexible lines, as each house may thus be easily connected in the desired manner with an inlet for heating fluid.

As can be seen, a second division gully 4 may be provided with a plurality of gully connecting supply and gully connecting return lines, which extend into the first division gullies 6.

If a part of a city is extended and a new series of houses has to be connected with the heat fluid supply, a new gully connecting supply line 19 and a return line 19' (shown in the drawing with dotted lines) may be easily installed in a first division gully 6. As can be seen in the drawing the pipe system is not branched off from the main line for each house, but from a central point in the form of a first division gully 6.

The first division gullies 6 are advantageously provided with connections between the service connecting supply lines 7 to 12 included and the gully connecting supply line 5. The first division gully or gullies further comprise close-off valves 27, control and measuring devices, as well as deaeration systems 32 and the like which are provided separately for each house. The present invention offers the advantage that overhauls and repairs of these devices can presently be carried out beyond a house and/or buildings, connected with the pipe system.

Other advantages obtained with the present pipe system are lower installation costs, a great connection flexibility, even when city parts are extended, connections with new consumers are easily installed, no difficultly accessible connections, individually providing each house or edifice with a heating fluid, so that said edifice, house or a consumer may be individually closed off, so that certain repairs of lines to separate buildings do not impair the heat transport to the other consumers, while finally all control devices and adjusting devices for the respective heating system may be concentrated at a restricted number of accessible sites.

In addition thereto the instalment expenditures of a pipe system for conveying a heating fluid may be considerably reduced, so that the production costs of some materials to be employed may be increased, which will add to the durability of the system.

With respect to the foregoing it is emphasized hereby that the connections between the main supply line and the plastics gully connecting supply lines, plastics service connecting lines towards the houses or edifices respectively, may be accommodated in the first or the second division gully, so that the quality and fluid tightness of said connections may be easily controlled later on.

On the other hand the labour costs for digging trenches for lines, may be considerably reduced, as straightness and sloping positions of said trenches are far less important with the present invention, so that corrugated metal pipes or other flexible lines such as copper-insulated lines, may be used for the gully connecting supply and return lines and the connecting supply and return lines with the edifices and/or houses.

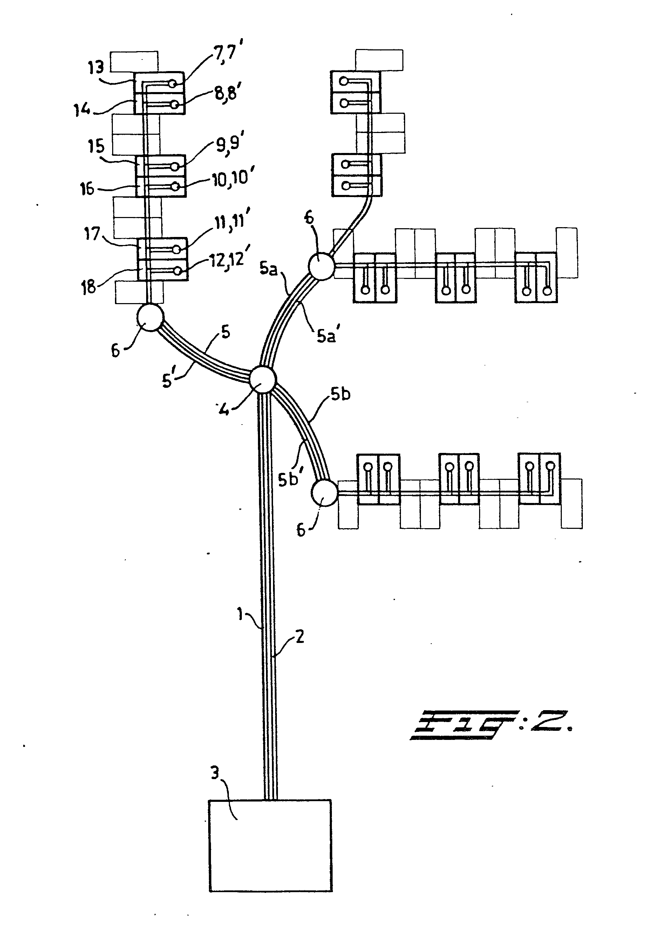

Figure 2 shows a very advantageous variant of the embodiment of fig. 1. In this case the first division gully is always accommodated at the beginning of a unit of houses, such as a block of houses. From said first division gully the connecting lines may then easily be guided through the partition walls of all houses, so that outside digging labours are restricted to digging a trench for installing a gully connecting supply and return line between the first and the second division gully into which the main supply line and the main discharge line extend.

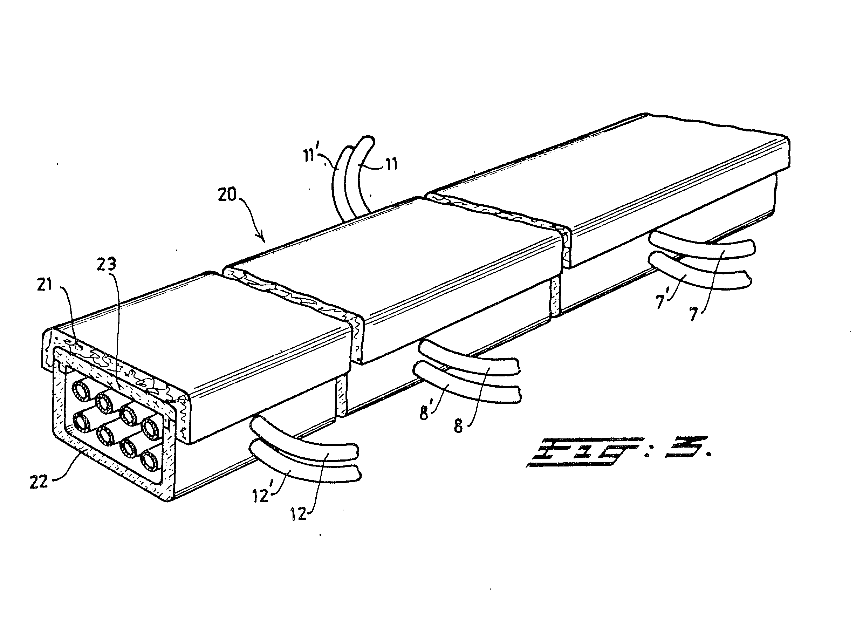

An additional important advantage in this case is in that the connecting lines 7 to 12 included and 7' to 12' included, may be accommodated in one single casing 20, surrounding said connecting lines. Said casing 20 may be provided with an insulating layer 21, but in many cases this is not essential, as heat escaping from said casing will be given off to the houses as yet, via the floor. The casing advantageously consists of a gutter 22 comprising a cover 23, as shown in fig. 3.

It is clearly shown that the number of connecting lines in casing 20 gradually decrease towards the end of said casing.

Obviously the passages through the gully walls are provided with seals 33.

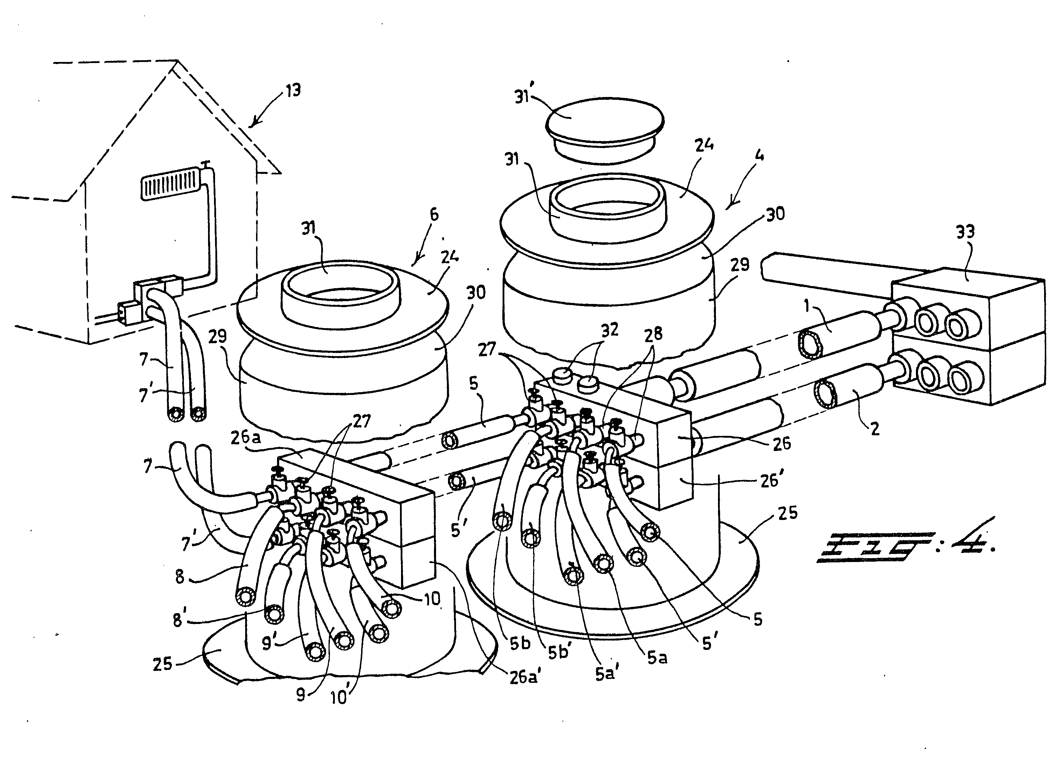

Fig. 4 shows part of the pipe system according to the present invention. As can be seen, the first and second division gullies 6 and 4 are preferably provided with at least one flange 24, so as to prevent said gully from being pressed upwardly. More preferably, a second flange 25 is also used.

Each second division gully 4 appropriately comprises a supply divider 26 which preferably consists of stainless steel or of brass and which is on the one hand connected with the main supply line 1 and on the other hand with a number of gully connecting supply lines 5, through branches. Each gully connecting supply line comprises a close-off valve 27 and a non-return valve 28. The first division gully 4 also comprises a second supply divider 26a, being connected with the service connecting lines 7, 8, 9, 10, 11 and 12 and with a gully connecting supply line 5. The connecting lines 1 to 12 included also comprise close-off valves 27 and non-return valves 28.

The supply divider 26 and 26a conveniently comprise air release valves 32.

The second division gully 4 further comprises a return divider 26' being connected with the main discharge line 2 and with the gully return lines 5', non-return valves 28 and, if desired, close-off valves 27 are also present in this case.

The first division gully 6 further comprises a second return divider 26a', which is connected with service return lines 7' to 12' and gully return line 5'. In this case non-return valves 28, and, if desired, close-off valves 27 are also present.

Obviously, the main supply line 1 and the main discharge-line 2 may also debouch into main dividers 33.

The division gullies 4 and 6 advantageously consist of a cylindrical plastics body 29, preferably of a fibre-reinforced thermosetting resin. The second division gully comprises a tapering upper part 30, which adjoins a cylindrical upper part 31, having a diameter being smaller than that of body 29. The division gully is closed by means of a gully cover 31'. However, cylindrical bodies 29 to which a cover 31' directly adjoins, may also be used.

Claims:

1. Pipe system for conveying a heating fluid, to a plurality of edifices or houses to be separately heated, comprising a main supply and a main discharge line (1, 2) as well as service connecting lines from each edifice or house, which service connecting lines are connected with the main discharge and the main supply line (2, 1) characterised in that the pipe system comprises at least a first division gully (6) into which on the one hand the service connecting supply and return lines (1 to 7, 1' to 7') of a group of edifices or houses extend, whilst on the other hand the supply and return lines are connected directly or indirectly with a main supply line and a main discharge line (1, 2) in said first division gully (6).

2. Pipe system according to claim 1, in which the system comprises at least one, preferably a plurality of first division gullies (6) and at least one second division gully (4), gully connecting supply and return lines (5, 5', 5a, 5a') connecting a second (4) and a first division gully (6), extending into said first and into second division gullies.

3. Pipe system according to claim 1, or 2, in which the first division gully (6) is installed in the vicinity of a unit or block of houses or edifices.

4. Pipe system according to any or more of the preceding claims, in which flexible gully connecting lines (5, 5') and/or flexible service lines (1 to 7; 1' to 7') are used.

5. Pipe system according to any or more of the preceding claims, in which the flexible connecting service lines and/or the gully connecting lines consist of plastics, preferably of polypropylene, polybutylene, polyvinylidene fluoride or reticulated polyethylene.

6.    Pipe system according to any or more of the preceding claims, in which the main supply line and the main discharge line (1, 2) consist  of insulated lines.

7.    Pipe system according to any or more of the preceding claims, in which the connecting service supply and return lines (7 to 12, 7' to 12') are assembled to one unit being surrounded by a casing, said casing extending across an entire block of houses or edifices, said connecting service supply and return lines all extending into a first division gully (6) which first division gully (6) is preferably installed in the vicinity of a block of houses or edifices.

8.    Pipe system according to any or more of the preceding claims, in which the connections (26, 26', 26a, 26a') between various different lines are disposed in said division gullies (4, 6) and preferably all additional implements.

9.    Pipe system according to any or more of the preceding claims, in which the division gullies are provided with means preventing an upward movement of said gullies, said division gullies being preferably whether or not reinforced plastics division gullies.

10. Division gully, preferably consisting of plastics, being whether or not reinforced, and suitable for use in a pipe system as claimed in any or more of the preceding claims.

0027676

FIG:1.

*FIG:2.*

Fig: 3.

FIG. 4.

-4/4-

## DOCUMENTS CONSIDERED TO BE RELEVANT

| Category | Citation of document with indication, where appropriate, of relevant passages | Relevant to claim |
|---|---|---|
| X | US - A - 4 075 861 (THYBERGER)<br>* Column 4, lines 5-21; figure 2 *<br><br>-- | 1,3,7,9 |
| | CH - A - 192 095 (SULZER)<br>* The entire document *<br><br>-- | 8 |
| | DE - A - 2 038 991 (ANGER)<br>* Page 5, paragraph 1 *<br><br>-- | 4,5 |
| A | FR - A - 1 515 694 (FURUKAWA)<br><br>------ | 4,5 |

**CLASSIFICATION OF THE APPLICATION (Int. Cl. 3)**

F 24 D 3/10
3/00

**TECHNICAL FIELDS SEARCHED (Int.Cl. 3)**

F 24 D
F 16 L

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 26-01-1981 | VAN GESTEL |

EPO Form 1503.1 06.78